# EUROPÄISCHE PATENTSCHRIFT

(11) **EP 2 822 837 B1**
(45) Veröffentlichungstag und Bekanntmachung des Hinweises auf die Patenterteilung: **27.09.2017**
(21) Anmeldenummer: 13707105.6
(22) Anmeldetag: 18.02.2013
(51) Int. Cl.: B62D 1/28, G05D 1/02

(54) **SPURFÜHRUNGSSYSTEM UND ANLAGE MIT EINEM FAHRZEUG MIT SPURFÜHRUNGSSYSTEM**
TRACK GUIDANCE SYSTEM AND FACILITY COMPRISING A VEHICLE HAVING A TRACK GUIDANCE SYSTEM
SYSTÈME DE GUIDAGE ET INSTALLATION COMPRENANT UN VÉHICULE POURVU D'UN SYSTÈME DE GUIDAGE

(30) Priorität: 06.03.2012 DE 102012004228
(43) Veröffentlichungstag der Anmeldung: 14.01.2015
(73) Patentinhaber: Sew-Eurodrive GmbH & Co. KG, 76646 Bruchsal (DE)
(72) Erfinder: HUA, Zhidong, 76137 Karlsruhe (DE); SIMON, Olaf, 76646 Bruchsal (DE); SCHMIDT, Josef, 76676 Graben-Neudorf (DE); SCHÄFER, Thomas, 76689 Neuthard (DE); SCHOCH, Michael, 77776 Bad Rippoldsau-Schapbach (DE)
(86) Internationale Anmeldenummer: PCT/EP2013/000469
(87) Internationale Veröffentlichungsnummer: WO 2013/131613

(56) Entgegenhaltungen:
- GB-A- 1 309 420
- JP-A- S5 775 318

## Beschreibung

Die Erfindung betrifft ein Spurführungssystem und eine Anlage mit einem Fahrzeug mit Spurführungssystem.

Es ist allgemein bekannt, dass ein Fahrzeug mit einem Spurführungssystem ausgestattet werden kann, das einem langgestreckt verlegten Leitmittel

Aus der GB 1 309 420 A ist ein Spurführungssystem für automatisch geführte Fahrzeuge bekannt.

Der Erfindung liegt daher die Aufgabe zugrunde, ein Spurführungssystem zu verbessern.

Erfindungsgemäß wird die Aufgabe bei der nach den in Anspruch 1 angegebenen Merkmalen gelöst.

Wichtige Merkmale der Erfindung bei dem Spurführungssystem sind, dass in einer Anlage, insbesondere in einer Fahrebene eines Fahrzeugs, ein eine Fahrstrecke für ein Fahrzeug kennzeichnendes, insbesondere langgestrecktes, metallisches Leitmittel, insbesondere Metallstreifen oder Metalldraht, angeordnet ist,
wobei das Fahrzeug ein erstes Paar und ein zweites Paar Metallflächen aufweist,
wobei die Metallflächen jedes Paares einen geringeren Abstand zueinander aufweisen als die Paare zueinander,
wobei die Metallflächen der Paare derart ausgeführt und angeordnet sind, dass bei Verschiebung des Fahrzeugs in Querrichtung zur Fahrstreckenrichtung und/oder Leitmittelerstreckungsrichtung zumindest innerhalb eines Positionsbereichs die Kapazität des ersten Paares zunimmt und die Kapazität des zweiten Paares abnimmt,
wobei die Kapazitäten Teil einer elektronischen Schaltung des Fahrzeugs sind.

Unter Fahrebene ist stets auch eine Fahrfläche, beispielsweise eine leicht gekrümmte Fläche, zu verstehen, entlang derer das Fahrzeug verfahrbar ist.

Von Vorteil ist dabei, dass die kapazitive Kopplung verwendbar ist zur Spurführung, wobei die kapazitive Kopplung bei Abweichung des Fahrzeugs in Querrichtung sich verändert. Insbesondere durch die gegenläufige Abhängigkeit der beiden kapazitiven Kopplungen ist eine besonders einfache Regelung auf die mittige Lage des Fahrzeugs ermöglicht.

Bei einer vorteilhaften Ausgestaltung weist die elektronische Schaltung eine Reglereinheit auf, welche derartige Steuersignale einer Lenkeinrichtung des Fahrzeugs zuführt, dass diese entlang des Leitmittels und/oder der Fahrstrecke gesteuert wird, indem die Reglereinheit die Steuersignale derart bestimmt, dass die Frequenz eines Schwingkreises auf ein Extremum hingeregelt wird. Von Vorteil ist dabei, dass in sehr einfacher Weise auf die mittige Lage hin regelbar ist.

Bei einer vorteilhaften Ausgestaltung umfasst der Positionsbereich die zum Leitmittel mittige Lage des Fahrzeugs, insbesondere also die Position mit der maximale Kopplung zwischen den Metallflächen und dem Leitmittel vom Positionsbereich umfasst ist. Von Vorteil ist dabei, dass

Bei einer vorteilhaften Ausgestaltung umfassen die Metallflächen in einer Ebene angeordnet sind oder eine Ebene, welche zumindest abschnittsweise parallel zum Leitmittel ausgerichtet ist,
insbesondere wobei die Metallflächen an der dem Leitmittel zugewandten Seite, insbesondere Unterseite des Fahrzeugs angeordnet sind. Von Vorteil ist dabei, dass die Herstellung der Spurführungsanordnung einfach ist, indem die Metallflächen an einer ebenen Seite eines Fahrzeugs anbringbar sind. Außerdem ist durch die einfache Montage sicherstellbar, dass die Kapazität des ersten und des zweiten Paares in der zum Leitmittel mittigen Position des Fahrzeugs gleich sind.

Unter mittiger Position wird hier diejenige Position des Fahrzeugs, insbesondere seines Schwerpunkts, verstanden, in welcher die kapazitive Kopplung des ersten Paares an das Leitmittel und die kapazitive Kopplung des zweiten Paares an das Leitmittel gleich groß sind.

Da das erste Paar in Fahrrichtung beabstandet ist von dem zweiten Paar und die jeweilige kapazitive Kopplung an das Leitmittel sich verändert, wenn das Fahrzeug in oder entgegen der Querrichtung von seiner mittigen Position abweicht, ist bei Gleichheit der kapazitiven Kopplung der beiden Paare an das Leitmittel auch eine räumliche Orientierung des Fahrzeugs erreicht. Das Fahrzeug ist also einerseits entlang des Leitmittels, insbesondere ein dünner Metall-Draht oder ein Metallstreifen, geführt und andererseits bei der Fahrbewegung auch ausrichtbar.

Bei einer vorteilhaften Ausgestaltung weisen die Metallflächen jeweils eine dreieckförmige Ausformung auf. Von Vorteil ist dabei, dass die Kapazität proportional zur Auslenkung des Fahrzeugs in Querrichtung ansteigt. Somit ist also eine lineare Kennlinie bewirkbar.

Bei einer vorteilhaften Ausgestaltung sind die Metallflächen in Fahrrichtung hintereinander angeordnet. Von Vorteil ist dabei, dass in Querrichtung die Breite der Metallflächen mit der Querrichtung zunimmt beim ersten Paar und abnimmt beim zweiten Paar.

Vorzugsweise weist der Zwischenbereich zwischen den Metallflächen eine in Fahrrichtung gemessene gleiche Breite auf, also unabhängig von der Querrichtungsposition. Besonders bevorzugt ist der Zwischenbereich rechteckförmig ausgeführt.

Bei einer vorteilhaften Ausgestaltung nimmt die in Fahrrichtung gemessene Breite jeder Metallfläche des ersten Paares in Querrichtung zu,
und/oder dass die in Fahrrichtung gemessene Breite jeder Metallfläche des zweiten Paares in Querrichtung abnimmt. Von Vorteil ist dabei, dass mittels der Ausformung der Metallflächen die Kennlinie der Abhängigkeit zwischen der Kapazität und der Position in Querrichtung vorgebbar ist, insbesondere als linearer Verlauf vorgebbar ist.

Bei einer vorteilhaften Ausgestaltung ist die Schnittfläche der senkrechten Projektion jeder Metallfläche des ersten Paares in die Fahrebene mit der senkrechten Projektion des Leitmittels in die Fahrebene leer oder nimmt zu, wenn das Fahrzeug in Querrichtung verschoben wird, insbesondere innerhalb des Positionsbereichs, oder leer ist, wenn das Fahrzeug derart weit in Querrichtung verschoben ist, dass es außerhalb des Positionsbereichs sich befindet,
insbesondere wobei die Fahrebene aus der Fahrrichtung und der Querrichtung aufgespannt wird. Von Vorteil ist dabei, dass vorzugsweise der Abstand zwischen der das Leitmittel aufnehmenden Fahrebene oder der das Leitmittel aufnehmenden parallel zur Fahrebene angeordneten Ebene einen konstanten Abstand zu der die Metallflächen aufnehmenden Ebene aufweist, indem diese parallel ausgerichtet ist zu der das Leitmittel aufnehmenden Ebene.

Bei einer vorteilhaften Ausgestaltung ist die Schnittfläche der senkrechten Projektion jeder Metallfläche des zweiten Paares in die Fahrebene mit der senkrechten Projektion des Leitmittels in die Fahrebene leer oder nimmt ab, wenn das Fahrzeug in Querrichtung verschoben wird, insbesondere innerhalb des Positionsbereichs, oder leer ist, wenn das Fahrzeug derart weit in Querrichtung verschoben ist, dass es außerhalb des Positionsbereichs sich befindet,
insbesondere wobei die Fahrebene aus der Fahrrichtung und der Querrichtung aufgespannt wird. Von Vorteil ist dabei, dass eine eindeutige Abhängigkeit der kapazitiven Kopplung der Metallflächen an das Leitmittel und der Position in Querrichtung erreichbar ist

Bei einer vorteilhaften Ausgestaltung ist der Metallstreifen entlang der Fahrstrecke verlegt und erstreckt sich somit in Fahrstreckenrichtung. Von Vorteil ist dabei, dass ein einfaches Verlegen des Leitmittels ausführbar ist.

Bei einer vorteilhaften Ausgestaltung ist Fahrrichtung die jeweilige Soll-Fahrtrichtung. Von Vorteil ist dabei, dass die Ausrichtung des Fahrzeuges in der Fahrebene und die Spurführung mittels der Erfindung einfach ausführbar ist.

Wichtige Merkmale bei der Anlage mit einem Fahrzeug mit Spurführungssystem sind, dass der Fahrantrieb und die elektronischen Schaltungen des Fahrzeuges aus einer Sekundärwicklung des Fahrzeugs versorgbar sind, wobei die Sekundärwicklung aus einem in der Anlage entlang der Fahrstrecke langgestreckt verlegten Primärleitersystem versorgbar ist.

Von Vorteil ist dabei, dass eine berührungslose Versorgung ermöglicht ist, wobei die Frequenz des Primärleiterstroms beabstandet ist von den für die Spurführung benutzten Frequenzen.

Die Erfindung wird nun anhand von Abbildungen näher erläutert:

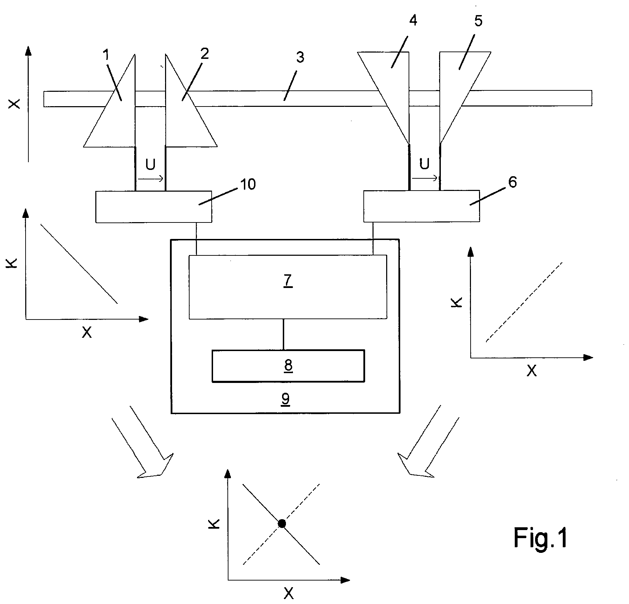

In der Figur 1 ist ein schematischer Aufbau einer erfindungsgemäßen Spurführungssensoranordnung gezeigt.
In der Figur 2 ist ein Fahrzeug 20 gezeigt, welches die Spurführungssensoranordnung aufweist.

Wie in den Figuren gezeigt, weist das Fahrzeug 20 an einem in Fahrtrichtung vorderen Unterseitenabschnitt zwei erste Metallflächen (1, 2) auf und an seinem in Fahrtrichtung hinteren Unterseitenabschnitt zwei weitere Metallflächen (4, 5) auf.

Die Metallflächen (1, 2, 4, 5) sind vorzugsweise dreieckförmig ausgeführt.

Die beiden ersten Metallflächen (1, 2) weisen quer zur Fahrtrichtung eine in Fahrtrichtung gemessene Ausdehnung, die in Querrichtung zunimmt. Weicht das Fahrzeug also von einem in der Anlage stationär angeordneten Metallstreifen 3 in Querrichtung ab, wird die auf den Metallstreifen projizierte Ausdehnung der Metallflächen (1, 2) größer. Dabei ist der Metallstreifen langgestreckt in der Anlage verlegt. Der Metallstreifen 3 weist eine zumindest abschnittsweise gleichmäßige Ausdehnung, insbesondere Breite, in Querrichtung auf.

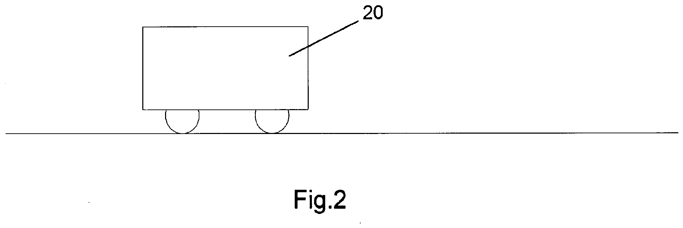

Zwischen den Metallflächen (1, 2) besteht eine Kapazität, die von dem Metallstreifen 3 beeinflusst wird. Abhängig von der Abweichung in Querrichtung verändert sich die Kapazität. Dies ist in der in Figur 2 linken Kennlinie dargestellt. Dabei nimmt die Kapazität, die auch für die Kopplung K kennzeichnend ist, mit zunehmender Abweichung X des Fahrzeuges in Querrichtung ab.

Die Querrichtung und die Fahrtrichtung spannen diejenige Ebene auf, in welcher sich das Fahrzeug 20 bewegbar ist.

Das Fahrzeug weist eine Lenkvorrichtung auf, so dass es innerhalb der Ebene verfahrbar ist.

Das Fahrzeug weist an seiner Unterseite im in Fahrtrichtung gesehen hinteren Teil des Fahrzeugs die beiden weiteren Metallflächen (4, 5) auf, deren in Fahrtrichtung gemessene Ausdehnung in Querrichtung abnimmt. Weicht das Fahrzeug also von einem in der Anlage stationär angeordneten Metallstreifen 3 in Querrichtung ab, wird die auf den Metallstreifen projizierte Ausdehnung der Metallflächen (1, 2) kleiner.

Die zu den Metallflächen (4, 5) gehörende Kapazität oder zugehörige Kopplung nimmt wiederum mit zunehmender Abweichung des Fahrzeugs in Querrichtung zu. Die zugehörige Kennlinie ist in Figur 2 dargestellt. Sie ist vorzugsweise gegenläufig, insbesondere bis auf Nullpunktverschiebung im Wesentlichen invers, zur zu den Metallflächen (1, 2) zugeordneten Kennlinie.

Die Kapazität wird beispielhaft bestimmt, indem eine Wechselspannung an das jeweilige Paar von Metallflächen (1, 2) oder (4, 5) angelegt wird und die Phasenverschiebung zum Strom ausgewertet wird.

In der Mittellage, also bei in Querrichtung mittiger Anordnung des Fahrzeugs über dem Metallstreifen, sind die von den beiden Paaren jeweils bewirkten Phasenverschiebungen gleich. Bei zunehmender Abweichung des Fahrzeugs in Querrichtung unterschieden sich die bewirkten Phasenverschiebungssignale zunehmend.

Statt der Bildung von Phasenverschiebungssignalen ist auch die jeweilige Bildung von anderen Signalen verwendbar, wobei die Signale abhängig von der jeweiligen Kapazität oder Kopplung veränderlich sein müssen.

Die beiden Signale werden jeweils einem AD/DA-Wandler (6, 10) zugeführt, die dann einem in einem Prozessor 9 ausgeführten Sinusgenerator 7, der als Detektor wirksam ist, zugeführt werden. Das Ausgangssignal wird einem ebenfalls im Prozessor 9 ausgeführten Evaluator 8 zugeführt.

Im unteren Teil der Figur 2 ist die Zusammenführung der Kennlinien gezeigt, wobei die mittige Ausrichtung des Fahrzeugs 20 durch den Schnittpunkt gekennzeichnet ist. Das von der beschriebenen Spurführungssensoranordnung erzeugte Ausgangssignal wird also einer Regeleinrichtung zugeführt, die der Lenkeinrichtung des Fahrzeugs 20 derartige Steuersignale zuführt, dass das Fahrzeug auf die mittige Lage hin geregelt wird.

Die Metallflächen 1 und 2 weisen in Fahrtrichtung einen geringen Abstand voneinander auf. Der Metallstreifen ist in der Fahrebene angeordnet. Vorzugsweise sind die Metallflächen 1 und 2 als Flachplatten oder Folienabschnitte ausgeführt. Die senkrechte Projektion der Metallflächen 1 und 2 in die Fahrebene, weist jeweils einen nicht leeren Schnitt auf. Die zugehörige Schnittfläche nimmt jeweils zu, wenn das Fahrzeug in Querrichtung verschoben wird. Somit steigt dann auch die kapazitive Kopplung zwischen den Metallflächen 1 und 2 zum Metallstreifen 3 an. Insgesamt steigt also die Kapazität zwischen den Metallflächen 1 und 2 ebenfalls an. Wird nun die Kapazität in einem Schwingkreis, insbesondere des Sinusgenerators 7, eingesetzt, also mit einer Induktivität in Reihe oder parallel zusammengeschaltet, verändert sich die Resonanzfrequenz entsprechend.

Die Metallflächen 4 und 5 sind analog angeordnet, insbesondere zu einer die die Fahrtrichtung, also Erstreckungsrichtung des Metallstreifens 3, und die Normale der Fahrebene enthaltenden Ebene gespiegelt.

Wenn nun die beiden so gebildeten Kapazitäten in Reihe oder parallel zusammengeschaltet werden und die so gebildete Zusammenschaltung in einem Schwingkreis eingesetzt wird, ist die mittige Lage des Fahrzeugs durch ein lokales Minimum oder Maximum der Resonanzfrequenz in Abhängigkeit von der Abweichung in Querrichtung gekennzeichnet. Somit muss ein Regler die Lenkeinrichtung nur derart ansteuern, dass das Minimum beziehungsweise Maximum der Resonanzfrequenz erreicht wird. Dies ist für einen Regler in einfacher und stabiler Weise ermöglicht, insbesondere also ohne Schwingungsneigung.

### Bezugszeichenliste

- 1: Metallfläche
- 2: Metallfläche
- 3: Metallstreifen
- 4: Metallfläche
- 5: Metallfläche
- 6: AD/DA-Wandler
- 7: Sinusgenerator/ Detektor
- 8: Evaluator
- 9: Prozessor
- 10: AD/DA-Wandler

- 20: Fahrzeug

- X: Position
- K: Kopplung

## Patentansprüche

1. Spurführungssystem,
wobei in einer Anlage, insbesondere in einer Fahrebene eines Fahrzeugs (20), ein eine Fahrstrecke für ein Fahrzeug (20) kennzeichnendes, insbesondere langgestrecktes, metallisches Leitmittel, insbesondere Metallstreifen (3) oder Metalldraht, angeordnet ist,
**dadurch gekennzeichnet, dass**
das Fahrzeug (20) ein erstes Paar und ein zweites Paar Metallflächen (1, 2, 4, 5) aufweist,
wobei die Metallflächen (1, 2, 4, 5) jedes Paares einen geringeren Abstand zueinander aufweisen als die Paare zueinander,
wobei die Metallflächen (1, 2, 4, 5) der Paare derart ausgeführt und angeordnet sind, dass bei Verschiebung des Fahrzeugs (20) in Querrichtung zur Fahrstreckenrichtung und/oder Leitmittelerstreckungsrichtung zumindest innerhalb eines Positionsbereichs die Kapazität des ersten Paares zunimmt und die Kapazität des zweiten Paares abnimmt,
wobei die Kapazitäten Teil einer elektronischen Schaltung des Fahrzeugs (20) sind.

2. Spurführungssystem nach mindestens einem der vorangegangenen Ansprüche,
**dadurch gekennzeichnet, dass**
die elektronische Schaltung eine Reglereinheit aufweist, welche derartige Steuersignale einer Lenkeinrichtung des Fahrzeugs (20) zuführt, dass diese entlang des Leitmittels und/oder der Fahrstrecke gesteuert wird, indem die Reglereinheit die Steuersignale derart bestimmt, dass die Frequenz eines Schwingkreises auf ein Extremum hingeregelt wird.

3. Spurführungssystem nach mindestens einem der vorangegangenen Ansprüche,
**dadurch gekennzeichnet, dass**
der Positionsbereich die zum Leitmittel mittige Lage des Fahrzeugs (20) umfasst, insbesondere also die Position mit der maximale Kopplung zwischen den Metallflächen (1, 2, 4, 5) und dem Leitmittel vom Positionsbereich umfasst ist.

4. Spurführungssystem nach mindestens einem der vorangegangenen Ansprüche,
**dadurch gekennzeichnet, dass**
die Metallflächen (1, 2, 4, 5) in einer Ebene angeordnet sind oder eine Ebene umfassen, welche zumindest abschnittsweise parallel zum Leitmittel ausgerichtet ist,
insbesondere wobei die Metallflächen (1, 2, 4, 5) an der dem Leitmittel zugewandten Seite, insbesondere Unterseite des Fahrzeugs (20) angeordnet sind.

5. Spurführungssystem nach mindestens einem der vorangegangenen Ansprüche,
**dadurch gekennzeichnet, dass**
die Metallflächen (1, 2, 4, 5) jeweils eine dreieckförmige Ausformung aufweisen.

6. Spurführungssystem nach mindestens einem der vorangegangenen Ansprüche,
**dadurch gekennzeichnet, dass**
die Metallflächen (1, 2, 4, 5) in Fahrrichtung hintereinander angeordnet sind.

7. Spurführungssystem nach mindestens einem der vorangegangenen Ansprüche,
**dadurch gekennzeichnet, dass**
die in Fahrrichtung gemessene Breite jeder Metallfläche (1, 2, 4, 5) des ersten Paares in Querrichtung zunimmt,
und/oder dass die in Fahrrichtung gemessene Breite jeder Metallfläche (1, 2, 4, 5) des zweiten Paares in Querrichtung abnimmt.

8. Spurführungssystem nach mindestens einem der vorangegangenen Ansprüche,
**dadurch gekennzeichnet, dass**
die Schnittfläche der senkrechten Projektion jeder Metallfläche (1, 2, 4, 5) des ersten Paares in die Fahrebene mit der senkrechten Projektion des Leitmittels in die Fahrebene leer ist oder zunimmt, wenn das Fahrzeug (20) in Querrichtung verschoben wird, insbesondere innerhalb des Positionsbereichs, oder leer ist, wenn das Fahrzeug (20) derart weit in Querrichtung verschoben ist, dass es außerhalb des Positionsbereichs sich befindet,
insbesondere wobei die Fahrebene aus der Fahrrichtung und der Querrichtung aufgespannt wird.

9. Spurführungssystem nach mindestens einem der vorangegangenen Ansprüche,
**dadurch gekennzeichnet, dass**
die Schnittfläche der senkrechten Projektion jeder Metallfläche (1, 2, 4, 5) des zweiten Paares in die Fahrebene mit der senkrechten Projektion des Leitmittels in die Fahrebene leer ist oder abnimmt, wenn das Fahrzeug (20) in Querrichtung verschoben wird, insbesondere innerhalb des Positionsbereichs, oder leer ist, wenn das Fahrzeug (20) derart weit in Querrichtung verschoben ist, dass es außerhalb des Positionsbereichs sich befindet,
insbesondere wobei die Fahrebene aus der Fahrrichtung und der Querrichtung aufgespannt wird.

10. Spurführungssystem nach mindestens einem der vorangegangenen Ansprüche,
**dadurch gekennzeichnet, dass**
der Metallstreifen (3) entlang der Fahrstrecke verlegt ist und sich somit in Fahrstreckenrichtung erstreckt.

11. Spurführungssystem nach mindestens einem der vorangegangenen Ansprüche,
**dadurch gekennzeichnet, dass**
Fahrrichtung die jeweilige Soll-Fahrtrichtung ist.

12. Anlage mit einem Fahrzeug (20) mit Spurführungssystem nach mindestens einem der vorangegangenen Ansprüche,
**dadurch gekennzeichnet, dass**
der Fahrantrieb und die elektronischen Schaltungen des Fahrzeuges (20) aus einer Sekundärwicklung des Fahrzeugs (20) versorgbar sind, wobei die Sekundärwicklung aus einem in der Anlage entlang der Fahrstrecke langgestreckt verlegten Primärleitersystem versorgbar ist.

## Claims

1. A track guidance system,
wherein a metallic guide means which marks a route for a vehicle (20) and is in particular elongate, in particular a metal strip (3) or metal wire, is arranged in an installation, in particular in a travelling plane of a vehicle (20),
**characterised in that**
the vehicle (20) has a first pair and a second pair of metal surfaces (1, 2, 4, 5),
the metal surfaces (1, 2, 4, 5) of each pair being at a lesser distance from each other than
the pairs are from each other,
the metal surfaces (1, 2, 4, 5) of the pairs being embodied and arranged such that upon displacement of the vehicle (20) in the transverse direction to the route direction and/or direction of extent of the guide means at least within a position region the capacitance of the first pair increases and the capacitance of the second pair decreases,
the capacitances being part of an electronic circuit of the vehicle (20).

2. A track guidance system according to at least one of the preceding claims,
**characterised in that**
the electronic circuit has a controller unit which supplies such control signals to a steering means of the vehicle (20) that it is controlled along the guide means and/or the route **in that** the controller unit determines the control signals such that the frequency of an oscillating circuit is adjusted to an extreme.

3. A track guidance system according to at least one of the preceding claims,
**characterised in that**
the position region comprises the position of the vehicle (20) central to the guide means, in particular therefore the position with the maximum coupling between the metal surfaces (1, 2, 4, 5) and the guide means is comprised by the position region.

4. A track guidance system according to at least one of the preceding claims,
**characterised in that**
the metal surfaces (1, 2, 4, 5) are arranged in a plane or comprise a plane which is oriented at least in portions parallel to the guide means,
in particular with the metal surfaces (1, 2, 4, 5) being arranged on the side facing the guide means, in particular underside of the vehicle (20).

5. A track guidance system according to at least one of the preceding claims,
**characterised in that**
the metal surfaces (1, 2, 4, 5) in each case have a triangular shaping.

6. A track guidance system according to at least one of the preceding claims,
**characterised in that**
the metal surfaces (1, 2, 4, 5) are arranged one behind another in the driving direction.

7. A track guidance system according to at least one of the preceding claims,
**characterised in that**
the width, measured in the driving direction, of each metal surface (1, 2, 4, 5) of the first pair increases in the transverse direction,
and/or **in that** the width, measured in the driving direction, of each metal surface (1, 2, 4, 5) of the second pair decreases in the transverse direction.

8. A track guidance system according to at least one of the preceding claims,
**characterised in that**
the plane of section of the vertical projection of each metal surface (1, 2, 4, 5) of the first pair into the travelling plane with the vertical projection of the guide means into the travelling plane is empty or increases if the vehicle (20) is displaced in the transverse direction, in particular within the position region, or is empty if the vehicle (20) is displaced so far in the transverse direction that it is located outside the position region,
in particular with the travelling plane being spanned from the driving direction and the transverse direction.

9. A track guidance system according to at least one of the preceding claims,
**characterised in that**
the plane of section of the vertical projection of each metal surface (1, 2, 4, 5) of the second pair into the travelling plane with the vertical projection of the guide means into the travelling plane is empty or decreases if the vehicle (20) is displaced in the transverse direction, in particular within the position region, or is empty if the vehicle (20) is displaced so far in the transverse direction that it is located outside the position region,
in particular with the travelling plane being spanned from the driving direction and the transverse direction.

10. A track guidance system according to at least one of the preceding claims,
**characterised in that**
the metal strip (3) is laid along the route and thus extends in the route direction.

11. A track guidance system according to at least one of the preceding claims,
**characterised in that**
the driving direction is the respective intended direction of travel.

12. An installation with a vehicle (20) with a track guidance system according to at least one of the preceding claims,
**characterised in that**
the traction drive and the electronic circuits of the vehicle (20) can be supplied from a secondary winding of the vehicle (20), the secondary winding being able to be supplied from a primary conductor system laid in elongate manner in the installation along the route.

## Revendications

1. Système de guidage,
sachant qu'un moyen de conduite métallique, en particulier s'étendant en longueur, en particulier une bande métallique (3) ou un fil métallique, marquant un parcours pour un véhicule (20), est disposé dans une installation, en particulier dans un plan de circulation d'un véhicule (20),
**caractérisé en ce que** le véhicule (20) présente une première paire et une deuxième paire de surfaces métalliques (1, 2, 4, 5),
sachant que les surfaces métalliques (1, 2, 4, 5) de chaque paire présentent une distance entre elles qui est inférieure à la distance entre les paires,
sachant que les surfaces métalliques (1, 2, 4, 5) des paires sont réalisées et disposées de telle sorte que, en cas de déport du véhicule (20) dans une direction transversale par rapport à la direction du parcours et/ou à la direction de développement du moyen de conduite, au moins à l'intérieur d'une plage de positions, la capacité de la première paire augmente et la capacité de la deuxième paire diminue,
sachant que les capacités font partie d'un circuit électronique du véhicule (20).

2. Système de guidage selon la revendication 1, **caractérisé en ce que** le circuit électronique présente une unité de régulation qui apporte à un organe de direction du véhicule (20) des signaux de commande tels que cet organe est commandé le long du moyen de conduite et/ou du parcours, par le fait que l'unité de régulation définit les signaux de commande de telle sorte que la fréquence d'un circuit oscillant est régulée en direction d'une valeur extrême.

3. Système de guidage selon au moins une des revendications précédentes, **caractérisé en ce que** la plage de positions comprend la position médiane du véhicule (20) par rapport au moyen de conduite, en particulier donc la position avec le couplage maximal entre les surfaces métalliques (1, 2, 4, 5) et le moyen de conduite est comprise dans la plage de positions.

4. Système de guidage selon au moins une des revendications précédentes, **caractérisé en ce que** les surfaces métalliques (1, 2, 4, 5) sont disposées dans un plan ou comprennent un plan qui est orienté au moins pour partie parallèlement au moyen de conduite,
sachant en particulier que les surfaces métalliques (1, 2, 4, 5) sont disposées sur le côté du véhicule (20) qui est tourné vers le moyen de conduite, en particulier sur le côté inférieur.

5. Système de guidage selon au moins une des revendications précédentes, **caractérisé en ce que** les surfaces métalliques (1, 2, 4, 5) présentent respectivement une conformation triangulaire.

6. Système de guidage selon au moins une des revendications précédentes, **caractérisé en ce que** les surfaces métalliques (1, 2, 4, 5) sont disposées les unes à la suite des autres dans la direction de marche.

7. Système de guidage selon au moins une des revendications précédentes, **caractérisé en ce que** la largeur, mesurée dans la direction de marche, de chaque surface métallique (1, 2, 4, 5) de la première paire augmente en direction transversale,
et/ou **en ce que** la largeur, mesurée dans la direction de marche, de chaque surface métallique (1, 2, 4, 5) de la deuxième paire diminue en direction transversale,

8. Système de guidage selon au moins une des revendications précédentes, **caractérisé en ce que** la surface d'intersection de la projection verticale de chaque surface métallique (1, 2, 4, 5) de la première paire dans le plan de circulation avec la projection verticale du moyen de conduite dans le plan de circulation est vide ou augmente lorsque le véhicule (20) est déporté en direction transversale, en particulier à l'intérieur de la plage de positions, ou est vide lorsque le véhicule (20) est déporté en direction transversale avec une ampleur telle qu'il se trouve en dehors de la plage de positions,
sachant en particulier que le plan de circulation est sous-tendu par la direction de marche et la direction transversale.

9. Système de guidage selon au moins une des revendications précédentes, **caractérisé en ce que** la surface d'intersection de la projection verticale de chaque surface métallique (1, 2, 4, 5) de la deuxième paire dans le plan de circulation avec la projection verticale du moyen de conduite dans le plan de circulation est vide ou diminue lorsque le véhicule (20) est déporté en direction transversale, en particulier à l'intérieur de la plage de positions, ou est vide lorsque le véhicule (20) est déporté en direction transversale avec une ampleur telle qu'il se trouve en dehors de la plage de positions,
sachant en particulier que le plan de circulation est sous-tendu par la direction de marche et la direction transversale.

10. Système de guidage selon au moins une des revendications précédentes, **caractérisé en ce que** la bande métallique (3) est posée le long du parcours et s'étend ainsi dans la direction du parcours.

11. Système de guidage selon au moins une des revendications précédentes, **caractérisé en ce que** la direction de marche est la direction de marche de consigne respective.

12. Installation comprenant un véhicule (20) pourvu d'un système de guidage selon au moins une des revendications précédentes, **caractérisée en ce que** l'entraînement de marche et les circuits électroniques du véhicule (20) peuvent être alimentés à partir d'un bobinage secondaire du véhicule (20), sachant que le bobinage secondaire peut être alimenté à partir d'un système de conducteur primaire posé dans l'installation le long du parcours en s'étendant en longueur.
